# EUROPEAN PATENT SPECIFICATION

(11) **EP 3 741 621 B1**
(45) Date of publication and mention of the grant of the patent: **16.08.2023**
(21) Application number: 19176128.7
(22) Date of filing: 23.05.2019
(51) Int. Cl.: B60Q 1/32, B60Q 1/34, B60Q 9/00, B60Q 1/52

(54) **LARGE VEHICLE TURNING SAFETY WARNING APPARATUS**
WARNVORRICHTUNG ZUR ABBIEGESICHERHEIT GROSSER FAHRZEUGE
APPAREIL D'AVERTISSEMENT DE SÉCURITÉ DE BRAQUAGE DE GRANDS VÉHICULES

(43) Date of publication of application: 25.11.2020
(73) Proprietor: Ching, Ya-Chi, Yilan City, Yilan County 260 (TW)
(72) Inventor: Ching, Ya-Chi, Yilan City, Yilan County 260 (TW)
(74) Representative: Cabinet Chaillot

(56) References cited:
- WO-A1-2009/091308
- WO-A1-2015/090330
- DE-U1-202016 004 062
- KR-A- 20180 061 674
- US-A- 5 497 304
- US-A1- 2009 069 977
- US-B1- 9 266 464

## Description

### FIELD OF THE INVENTION

The invention relates to a large vehicle turning safety warning apparatus, and more particularly to a large vehicle turning safety warning apparatus set with a warning device on at least one turning warning zone of a car body to warn the vehicles or pedestrians to evade their invisible zone.

### BACKGROUND OF THE INVENTION

With the vigorous development of the vehicle industry, the use of vehicles has become one of the indispensable tools in people's daily life. However, although vehicles can bring convenience to people's traffic, it is relatively easy to cause traffic accidents due to inadvertent driving or other factors.

When driving a large vehicle, even if the driver can assist in viewing different driving visions through a variety of mirrors (such as rearview mirror or side-view mirror), because the large vehicle occupies a large space, there will always be zones that the driver cannot see, and these zones are usually called invisible zones. Thus, when a vehicle (e.g. a motorcycle) approaches the large vehicle, if the motorcycle is situated right in the invisible zone of the large vehicle, it may be because the driver is unaware that there is a motorcycle in the invisible zone, and the motorcyclist cannot be warned that the driver is not aware of the invisible zone, thus causing related traffic accidents.

In order to provide early warning for motorcyclists to the invisible zone of large vehicles, some inventions have been invented to make large vehicles illuminate the invisible zone and thus achieve the warning function.

For example, if a prior technology (hereinafter referred to as the first prior technology) can use a steering wheel to synchronize with a control device, when the driver uses the steering wheel to make left or right turns, the steering wheel angle sensor will capture the steering wheel turning action, so as to drive the control device to control the laser to illuminate a zone formed by the difference of radius between inner wheels in the corresponding direction, and then remind others of the dangerous zones caused by turning large vehicles.

However, the first prior technology must wait until the large vehicle has turned (after the steering wheel turns) before it can illuminate the zone formed by the difference of radius between inner wheels. Thus, if pedestrians or motorcyclists are already in the zone formed by the difference of radius between inner wheels of the large vehicle, even if the large vehicle after turning will illuminate the zone formed by the difference of radius between inner wheels, traffic accidents may still occur because pedestrians or motorcyclists cannot evade them in time. Further, in order to avoid the steering wheel being too sensitive to mislead the driver to trigger the warning alarm device when changing the runway, a fuzzy control is usually installed in the first prior technology to prevent large vehicles from triggering the warning alarm device to illuminate the zone formed by the difference of radius between inner wheels due to vehicle jitter or small angle steering caused by changing the runway. However, the first prior technology cannot effectively achieve the early warning effect because such a design will delay the warning of pedestrians or motorcyclists even more.

Moreover, when the driver is parking, the steering wheel must be rotated substantially in order to effectively park, which will cause the warning device to be triggered continuously while parking. This will not only cause unnecessary waste of power, but also easily cause trouble to others.

For further example, another prior technology (hereinafter referred to as the second prior technology) can use a detection module to detect the steering parameter (the number of turns of the steering wheel) of the vehicle, then use a control module to calculate an area formed by the difference of radius between inner wheels based on the steering parameter and a built-in steering characteristic parameter, and then use a projection module to project the area formed by the difference of radius between inner wheels based on the calculated area formed by the difference of radius between inner wheels to achieve the function of early warning.

However, the range of the zone formed by the difference of radius between inner wheels of the large vehicle may vary depending on the size of the wheelbase, the car body, the speed and the turning angle. Therefore, the second prior technology only considers the steering parameter to calculate the zone formed by the difference of radius between inner wheels, which resulted in the inaccuracy of the calculated zone area.

Further, since the second prior technology will not perform the relevant calculation and projection until the vehicle is turned. As such, the second prior technology is similar to the first prior technology, which cannot effectively provide early warning for pedestrians or motorcyclists.

Moreover, the second prior technology needs to carry out relevant operations in each turn to calculate the area formed by the difference of radius between inner wheels, and must constantly change the illumination angle of the projection module in order to effectively project the calculated area formed by the difference of radius between inner wheels. In order to achieve the technical means to improve the above problems, it is necessary to install an additional computing element, as well as relevant pivoting devices or optical masks on the projection module. In this way, the cost of achieving the second prior technology will be greatly increased, and the function of early warning still cannot be effectively achieved.

WO 2009/091308 A1, US 5 497 304 A, WO 2015/090330 A1, US 9 266 464 B1 and DE 20 2016 004062 U1 all disclose other examples of side warning systems using warning lights. In particular, WO 2015/090330 A1 discloses a warning apparatus according to the preamble of claim 1.

In view of this, a simple and effective technology is urgently needed in this field to warn large vehicles of the invisible zone (the zone formed by the difference of radius between inner wheels) to improve the above problems.

### SUMMARY OF THE INVENTION

To solve the aforementioned problems, the object of the present invention is to provide a large vehicle turning safety warning apparatus, which is mainly through a warning device set on at least one turning warning zone of a car body, and the warning device has an inclination angle so as to present an illumination angle between the car body and a warning light emitted from the warning device, thereby avoiding the warning light directly illuminating the line of sight range of the motorcyclist or vehicle, and then a control signal is generated by a control module to control the starting or closing of the warning device, or to control the warning device to execute a warning mode. In this way, when vehicles, motorcyclists or pedestrians approach the car body, the invisible zone of the car body can be known by the warning device, so as to evade the invisible zone, thereby increasing the driving safety and improving the high-cost shortcomings. By synchronizing the warning device with a direction light to start or close the warning device through the direction light, or by starting or closing the warning device through a control module or a remote control device to provide warning or 24-hour sunshine warning. Therefore, the invention can effectively improve the deficiency of the existing technology in the early warning function.

To achieve the above object, the invention provides a large vehicle turning safety warning apparatus as defined in claim 1.

Preferably, the warning device is synchronized with a direction light of the car body. When the control module starts or closes the direction light, the control module simultaneously generates the control signal to start or close the at least one warning device based on the control signal.

Preferably, the control module is connected with a direction light control element, when the direction light control element sends a control instruction, the control module generates a direction light signal and the control signal, the control module transmits the direction light signal to the direction light to control the starting or closing of the direction light, and the control module simultaneously transmits the control signal to the at least one warning device to start or close the at least one warning device based on the control signal.

Preferably, the at least one warning device further executes a warning mode based on the control signal, and the warning mode is a constant brightness mode.

Preferably, the warning mode includes at least one or any combination of scintillation mode, breathing mode, flowing mode, and gradient mode.

Preferably, the control module is set on a display device, wherein the display device generates the control instruction for transmission to the control module.

Preferably, the display device includes one of the automotive control screens or intelligent mobile electronic devices.

Preferably, the warning light provided by each of the at least one warning device is a line-type light.

Preferably, the connection between the at least one warning device and the car body is made by using any connection mold such as clamping, sticking, welding or locking.

Preferably, the setting height of the at least one turning warning zone is smaller than an outer radius of the plural tires.

Preferably, each of the at least one warning device includes one of the daytime running light, LED light, laser light or halogen lamp.

Preferably, the car body includes one of the large passenger vehicle, bus, truck, dump truck, tour bus, tractor-full trailer, tractor-semi trailer or goods vehicle.

### BRIEF DESCRIPTION OF THE DRAWINGS

**FIG. 1** is a system connection diagram of the present invention.
**FIG. 2** is a schematic diagram of a setting position of a warning device on a large passenger vehicle according to a first embodiment of the present invention.
**FIG. 3** is a schematic diagram of a front view of the large passenger vehicle according to the first embodiment of the present invention.
**FIG. 4** is a schematic diagram of the large passenger vehicle turning according to the first embodiment of the present invention.
**FIG. 5** is a schematic diagram of a setting position of a warning device on a tractor-semi trailer according to a second embodiment of the present invention.
**FIG. 6** is a schematic diagram of a front view of the tractor-semi trailer according to the second embodiment of the present invention.
**FIG. 7** is a schematic diagram of the tractor-semi trailer turning according to the second embodiment of the present invention.
**FIG. 8** is a schematic diagram of a setting position of a warning device on a tractor-full trailer according to a third embodiment of the present invention.
**FIG. 9** is a schematic diagram of a front view of the tractor-full trailer according to the third embodiment of the present invention.
**FIG. 10** is a schematic diagram of the tractor-full trailer turning according to the third embodiment of the present invention.

### DETAILED DESCRIPTION OF THE PREFERRED EMBODIMENT

In order to make the object, technical scheme and advantages of the present invention clearer and easier to understand, the invention is further illustrated in detail below in connection with the drawings and embodiments. It should be understood that the specific embodiments described herein are used only to explain the invention, but not to limit the invention.

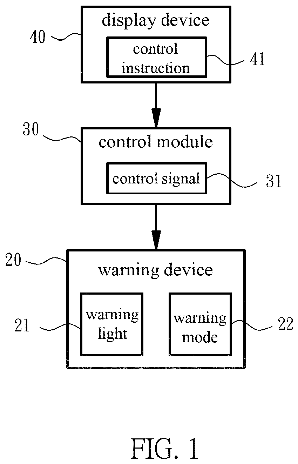

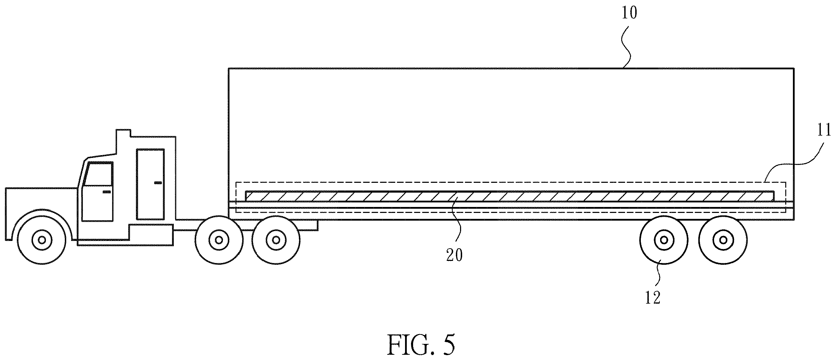

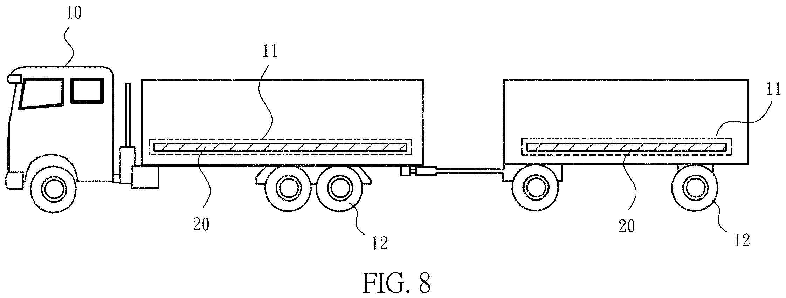

Referring to **FIGS. 1** to **10**, the invention discloses a large vehicle turning safety warning apparatus, in which the above-mentioned large vehicle refers to a large passenger vehicle, a bus, a truck, a dump truck, a tour bus, a tractor-full trailer, a tractor-semi trailer, a goods vehicle or other vehicles with a total weight of more than 3500 kilograms. When this kind of vehicle is driving, it is easy to cause many invisible zones which cannot be seen in driving because the car body is too large.

The present invention comprises a car body **10** (such as the large vehicle mentioned above), a plurality of warning devices **20** and a control module **30**. A periphery of the car body **10** is set with at least one turning warning zone **11** and a bottom of the car body **10** is set with plural tires **12** to assist the car body **10** to move. However, the specific setting position of the at least one turning warning zone **11** is on a frame of the car body **10** adjacent periphery to any one of the plural tires **12**, and is arranged on the car body **10** in a transverse encircling manner, while the setting height of the at least one turning warning zone **11** is between 1 and 1.4 meters, preferably between 1 and 1.2 meters.

Each warning device **20** is set on the turning warning zone **11** to connect with the car body **10**, in which the connection between the warning device **20** and the car body **10** is made by using any connection mold such as clamping, sticking, welding or locking. It only needs to connect the warning device **20** to the car body **10**, which is not limited to any specific connection mode. When the warning device **20** is set on the turning warning zone **11**, the warning device **20** is provided with an inclination angle so that any illumination angle *θ* between the car body **10** and a warning light **21** emitted by the warning device **20** is between 52 and 80 degrees to ensure that the warning light **21** is illuminated toward the ground, thereby avoiding the warning light **21** directly illuminating the line of sight range of a motorcyclist **50** or a vehicle.

In an embodiment not forming part of the claimed invention, when a single warning device **20** provides the warning light **21**, the warning light **21** is presented by a line-type light to delimit the boundary of the invisible zone. In the present invention, plural warning devices **20** are set on the turning warning zone **11**, and the warning lights **21** provided by the warning devices **20** will also be connected to each other in a line, so that when the motorcyclist **50** or pedestrian sees the line presented by the warning lights **21**, the region from the line to the car body **10** will be known as the invisible zone, so as to achieve the function of early warning. Further, if only the linear warning light **21** is provided, the power consumption needed to illuminate the entire area of the invisible zone can be effectively reduced and the same warning effect can be achieved.

For example, when the warning device **20** is set in parallel (approximately 90 degrees) with the car body **10**, the warning light **21** provided by the warning device **20** will be directly illuminated to the line of sight range of the motorcyclist **50** or even it will directly illuminate into the eyes of the motorcyclist **50**. In this way, it will prevent the motorcyclist **50** from checking the environmental conditions of the driving route normally and easily lead to traffic accidents. Therefore, when the warning device **20** is set on the turning warning zone **11**, the warning light **21** will be illuminated toward the ground due to the inclination angle. However, the degree of the inclination angle will be adjusted according to the size and height of the car body **10**, so that the warning light **21** with a suitable illumination angle *θ* can provide a warning to the motorcyclist **50** and avoid obstructing the line of sight of the motorcyclist **50**.

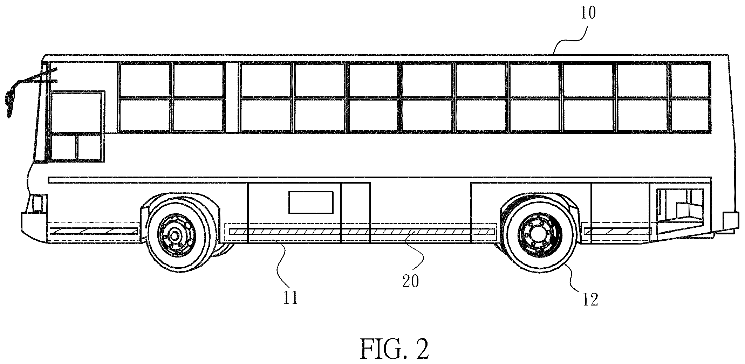

Further, because the warning device **20** is set at a height between 1 and 1.4 meters of the car body **10**, and more specifically between 1 and 1.2 meters in height. The height of the setting position of the warning device **20** is mainly determined by the size of the plural tires **12** at the bottom of the car body **10**. Generally speaking, the eye height of the motorcyclist **50** will be about 1.4 meters above when the motorcyclist **50** is driving. Thus, if the warning device **20** is set at a height above 1.4 meters, it will easily obstruct the line of sight of the motorcyclist **50** (as shown in **FIGS. 2****,** **5** and **8**).

Furthermore, the warning device **20** can be a daytime running light to provide 24-hour warning light (when the car body starts, the warning device is started to provide the warning light, or start or close the warning device through a remote control device), or any kind of LED light, laser light or halogen light can be used as the warning device **20** to provide the warning light **21**.

In one embodiment, the control module **30** is set on a display device **40** and connected to the warning device **20**. The display device **40** includes one of the automotive control screens or intelligent mobile electronic devices to generate a control instruction **41** through the display device **40**. The control module **30** receives the control instruction **41** to generate a control signal **31** which is then transmitted to the warning device **20**. In this way, the warning device **20** can start or close according to the control signal **31**, or execute a warning mode **22** according to the control signal **31**. The warning mode **22** includes at least one or any combination of scintillation mode, breathing mode, flowing mode, gradient mode and constant brightness mode, in which each of the above modes controls the warning device **20** to provide the warning light **21** in different illuminating modes to increase the attention of the motorcyclist **50**.

In another embodiment, the direction light control element in the car body **10** is connected with the control module **30**. When the driver toggles the direction light control element, the direction light control element generates a control instruction **41**. For example, when the direction light control element is toggled up, the direction light control element generates a control instruction **41** to start the right-turn direction light. When the control module **30** receives the control instruction **41**, besides generating a direction light signal for starting the right-turn direction light, it also simultaneously generates the control signal **31** for starting the warning device **20** set on the right side of the car body **10**. Then the control module **30** transmits the direction light signal to the direction light to start the right-turn direction light, and transmits the control signal **31** to the warning device **20** to start the warning device **20** on the right side. In this way, the warning device **20** can operate synchronously with the direction light. When the direction light is started, the warning device **20** can be started simultaneously to provide the warning light **21**. However, if the driver uses the direction light control element, a control instruction **41** for closing the direction light will be generated, and the control module **30** will also generate the direction light signal for closing the direction light and the control signal **31** for closing the warning device **20**, thereby closing the direction light and the warning device **20**. By synchronizing the warning device **20** with the direction light, the driver can warn the pedestrian or motorcyclist **50** of the invisible zone in advance before turning the large vehicle, so as to effectively achieve the early warning function.

Further, if both the display device **40** and the direction light control element can transmit the control instruction **41** to the control module **30** to control the starting or closing of the warning device **20**, not only will there be no conflicting phenomena between them, but also they can be used as a complement to each other. For example, when the direction light control element fails to work, the driver can still transmit the control instruction **41** through the display device **40** to control the starting or closing of the warning device **20**. Conversely, if the display device **40** fails to work, the control instruction **41** can be transmitted by the direction light control element to control the starting or closing of the warning device **20**. Thus, in this embodiment, the present invention can also avoid that the warning light **21** cannot be provided in advance by the warning device **20** when a fault occurs, so as to achieve the function of early warning.

When the car body **10** turns, according to the difference of the car body **10**, the difference of radius between inner wheels will be different; this will also lead to the change of the invisible zone of the car body **10**. Therefore, the far and near illumination of the warning light **21** provided by the warning device **20** will be adjusted according to the difference of radius between inner wheels (the inclination angle or the setting height of the warning device **20** can be used for adjustment).

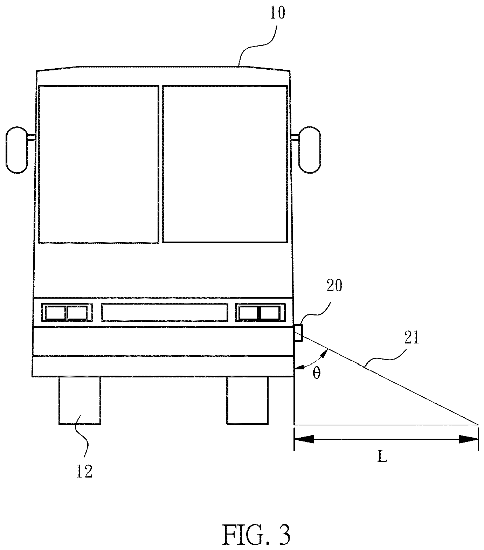

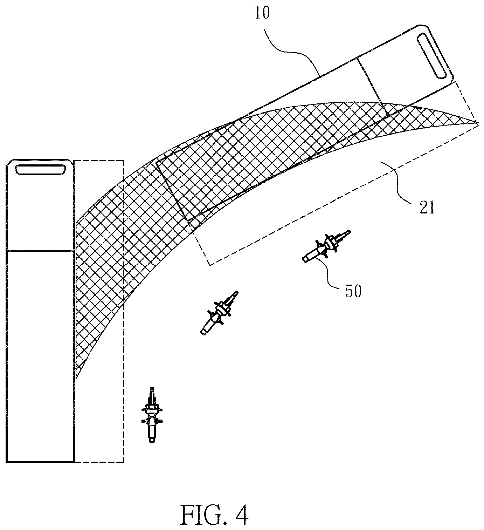

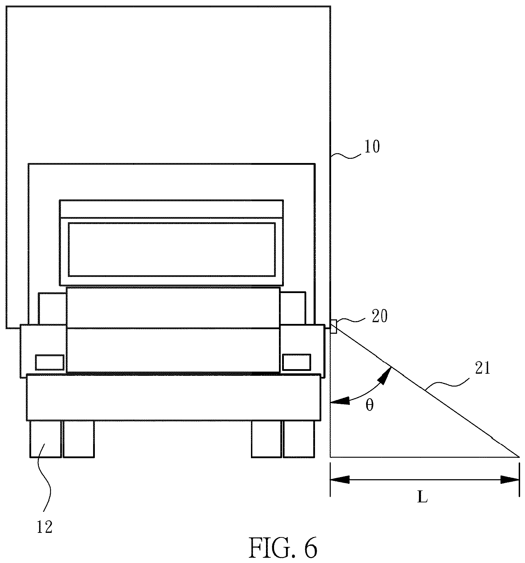

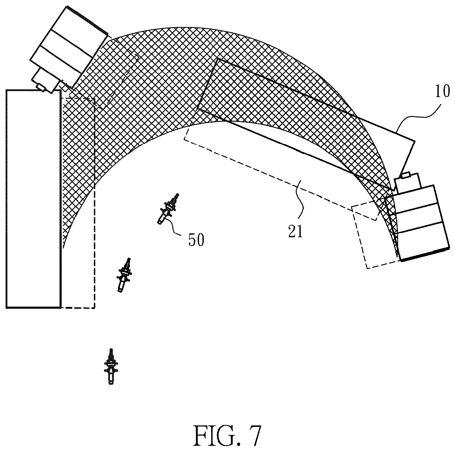

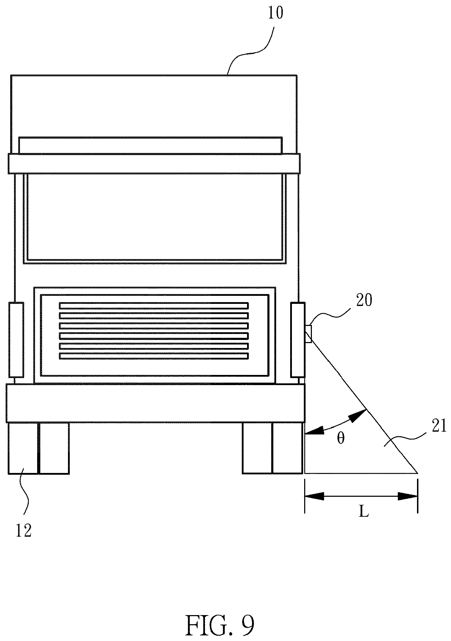

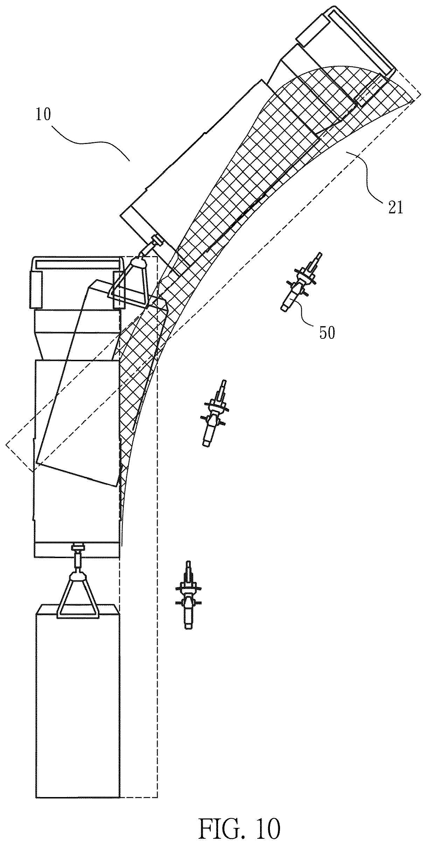

For example, if the car body **10** is a large passenger vehicle (as shown in **FIGS. 3** and **4****),** the range of the difference of radius between inner wheels will be between 3 and 4.5 meters, so when the warning device **20** is set on the car body **10** of the large passenger vehicle at a height of about 1 meter and the illumination angle ***θ*** of the warning light **21** is 52 degrees, the illumination distance **L** of the warning light **21** can be about 1.65 meters. Further, if the body **10** is a tractor-semi trailer (as shown in **FIGS. 6** and 7), the range of the difference of radius between inner wheels will be between 6 and 7.5 meters, so when the warning device **20** is set on the car body **10** of the tractor-full trailer at a height of about 1 meter, and the illumination angle ***θ*** of the warning light **21** is 55 degrees, the illumination distance **L** of the warning light **21** can be about 1.8 meters. Furthermore, if the car body **10** is a tractor-full trailer (as shown in **FIGS. 9** and **10**), the range of the difference of radius between inner wheels will be between 2 and 2.5 meters, so when the warning device **20** is set on the car body **10** of the tractor-semi trailer at a height of about 1 meter, and the illumination distance **L** of the warning light **21** can be about 1 meter. In this way, when the car body **10** turns, the motorcyclist **50** can be warned through the warning light **21** to avoid entering the invisible zone (that is, dangerous zone).

According to the present invention, the range of the illumination angle *θ* is between 52 and 80 degrees, but the more specific range can be between 52 and 55 degrees. However, the range of the illumination angle *θ* can be varied with the difference of the car body 10.

By virtue of the technical features disclosed by the present invention, the present invention has significant differences from the first prior technology and the second prior technology, and has the following advantages:
1. The invention uses the display device or the direction light control element as the means for starting or closing the warning device, so that the warning device can be started in advance before turning the car body to provide the warning light.
2. The invention provides a very simple structure, which can effectively achieve the function of early warning pedestrians or motorcyclists.
3. The invention provides a line-type warning light to provide warning in a way of using very little power consumption.

While the preferred embodiments of the invention have been set forth for the purpose of disclosure, they are not the limitations of the invention, modifications of the disclosed embodiments of the invention as well as other embodiments thereof may occur to those skilled in the art. Accordingly, the appended claims are intended to cover all embodiments which do not depart from the scope of the invention.

### Labels description

| | | | |
|---|---|---|---|
| **10** | car body | **11** | turning warning zone |
| **12** | tire | **20** | warning device |
| **21** | warning light | **22** | warning mode |
| **30** | control module | **31** | control signal |
| **40** | display device | **41** | control instruction |
| **50** | motorcyclist | ***θ*** | illumination angle |
| **L** | illumination distance | | |

## Claims

1. A large vehicle turning safety warning apparatus, comprising:
a car body (10), a periphery of the car body (10) being set at least one turning warning zone (11), and a bottom of the car body (10) being set with plural tires (12), wherein the at least one turning warning zone (11) is set on a frame of the car body (10) adjacent periphery to any one of the plural tires (12), and is arranged on the car body (10) in a transverse encircling manner, and extends toward to another of the plural tires (12),
a plurality of warning devices (20) being set on the turning warning zone (11), wherein each of the warning devices (20) provides a warning light (21) and is provided with an inclination angle so as to form an illumination angle (θ) between the warning light (21) toward the ground and the car body (10); and
a control module (30), the control module (30) being adapted to receive a control instruction (41) to generate a control signal (31), the control module (30) being connected with the warning devices (20) to transmit the control signal (31) to the warning devices (20), wherein the control module (30) is adapted to start or close the warning devices (20) based on the control signal (31),
**characterized in that**
the warning lights (21) provided by the warning devices (20) are connected to each other in a line to delimit a boundary of an invisible zone, wherein a region between the line and the car body (10) is the invisible zone;
a setting height of the at least one turning warning zone (11) is between 1 and 1.4 meters;
the illumination angle (θ) between the car body (10) and a warning light (21) is between 52 and 80 degrees.

2. The large vehicle turning safety warning apparatus of claim **1**, wherein the warning devices (20) are synchronized with a direction light of the car body (10), wherein the control module (30) is adapated to start and close the direction light and when the control module (30) starts or closes the direction light, the control module (30) simultaneously generates the control signal (31) to start or close the at least one warning device (20) based on the control signal (31).

3. The large vehicle turning safety warning apparatus of claim **2**, wherein the control module (30) is connected with a direction light control element, wherein the direction light control element is adapted to send a control instruction (41) and when the direction light control element sends a control instruction (41), the control module (30) generates a direction light signal and the control signal (31), the control module (30) transmits the direction light signal to the direction light to control the starting or closing of the direction light, and the control module (30) simultaneously transmits the control signal (31) to the at least one warning device (20) to start or close the at least one warning device (20) based on the control signal (31).

4. The large vehicle turning safety warning apparatus of claim **1**, wherein the warning devices (20) are further adapted to execute a warning mode (22) based on the control signal (31), and the warning mode (22) is a constant brightness mode.

5. The large vehicle turning safety warning apparatus of claim **1**, wherein the warning devices (20) are further adapted to execute a warning mode (22) based on the control signal (31), and the warning mode includes at least one or any combination of scintillation mode, breathing mode, flowing mode, and gradient mode.

6. The large vehicle turning safety warning apparatus of claim **1**, wherein the control module (30) is set on a display device (40), the display device (40) is adapted to generate the control instruction (41) for transmission to the control module (30).

7. The large vehicle turning safety warning apparatus of claim **1**, wherein the warning light (21) provided by each of the warning devices (20) is a line-type light.

8. The large vehicle turning safety warning apparatus of claim **1**, wherein the setting height of the at least one turning warning zone (11) is smaller than an outer radius of the plural tires (12).

9. The large vehicle turning safety warning apparatus of claim **1**, wherein each of the warning devices (20) includes one of the daytime running light, LED light, laser light or halogen lamp.

10. The large vehicle turning safety warning apparatus of claim **1**, wherein the car body (10) includes one of the large passenger vehicle, bus, truck, dump truck, tour bus, tractor-full trailer, tractor-semi trailer or goods vehicle.

## Patentansprüche

1. Warnvorrichtung zur Abbiegesicherheit großer Fahrzeuge, umfassend:
eine Autokarosserie (10), wobei ein Umfang der Autokarosserie (10) mindestens eine Abbiegewarnzone (11) umfasst, und wobei eine untere Seite der Autokarosserie (10) mehreren Reifen (12) umfasst, wobei die mindestens eine Abbiegewarnzone (11) auf einem Rahmen der Autokarosserie (10) angeordnet ist, benachbart dem Umfang eines der mehreren Reifen (12), und auf der Autokarosserie (10) auf quer umlaufende Weise angeordnet ist und sich hin zu einem anderen der mehreren Reifen (12) erstreckt,
wobei sich eine Vielzahl von Warnvorrichtungen (20) auf der Abbiegewarnzone (11) befindet, wobei jede der Warnvorrichtungen (20) ein Warnlicht (21) bereitstellt und mit einem Neigungswinkel ausgestattet ist, um einen Beleuchtungswinkel (θ) zwischen dem Warnlicht (21) hin zum Boden und der Autokarosserie (10) zu bilden; und
ein Steuermodul (30), wobei das Steuermodul (30) ausgelegt ist, um eine Steueranweisung (41) zu empfangen, um ein Steuersignal (31) zu erzeugen, wobei das Steuermodul (30) mit den Warnvorrichtungen (20) verbunden ist, um das Steuersignal (31) an die Warnvorrichtungen (20) zu übertragen, wobei das Steuermodul (30) ausgelegt ist, um die Warnvorrichtungen (20) auf der Grundlage des Steuersignals (31) zu starten und zu schließen,
**dadurch gekennzeichnet, dass**
die Warnlichter (21), die von den Warnvorrichtungen (20) bereitgestellt sind, miteinander in einer Linie verbunden sind, um eine Grenze einer unsichtbaren Zone abzustecken, wobei eine Region zwischen der Linie und der Autokarosserie (10) die unsichtbare Zone ist;
eine Einstellungshöhe der mindestens einen Abbiegewarnzone (11) zwischen 1 und 1,4 Metern ist; der Beleuchtungswinkel (θ) zwischen der Autokarosserie (10) und dem Warnlicht (21) zwischen 52 und 80 Grad ist.

2. Warnvorrichtung zur Abbiegesicherheit großer Fahrzeuge nach Anspruch 1, wobei die Warnvorrichtungen (20) mit einem Richtungslicht der Autokarosserie (10) synchronisiert sind, wobei das Steuermodul (30) ausgelegt ist, um das Richtungslicht zu starten und zu schließen, und wenn das Steuermodul (30) das Richtungslicht startet oder schließt, das Steuermodul (30) gleichzeitig das Steuersignal (31) erzeugt, um die mindestens eine Warnvorrichtung (20) auf der Grundlage des Steuersignals (31) zu starten oder zu schließen.

3. Warnvorrichtung zur Abbiegesicherheit großer Fahrzeuge nach Anspruch 2, wobei das Steuermodul (30) mit einem Richtungslicht-Steuerelement verbunden ist, wobei das Richtungslicht-Steuerelement ausgelegt ist, um eine Steueranweisung (41) zu senden, und wenn das Richtungslicht-Steuerelement eine Steueranweisung (41) sendet, das Steuermodul (30) ein Richtungslichtsignal und das Steuersignal (31) erzeugt, das Steuermodul (30) das Richtungslichtsignal an das Richtungslicht überträgt, um das Starten oder Schließen des Richtungslichts zu steuern, und das Steuermodul (30) gleichzeitig das Steuersignal (31) an die mindestens eine Warnvorrichtung (20) überträgt, um die mindestens eine Warnvorrichtung (20) auf der Grundlage des Steuersignals (31) zu starten und zu schließen.

4. Warnvorrichtung zur Abbiegesicherheit großer Fahrzeuge nach Anspruch 1, wobei die Warnvorrichtungen (20) weiter ausgelegt sind, um einen Warnmodus (22) auf der Grundlage des Steuersignals (31) auszuführen, und der Warnmodus (22) ein konstanter Helligkeitsmodus ist.

5. Warnvorrichtung zur Abbiegesicherheit großer Fahrzeuge nach Anspruch 1, wobei die Warnvorrichtungen (20) weiter ausgelegt sind, um einen Warnmodus (22) auf der Grundlage des Steuersignals (31) auszuführen, und der Warnmodus (22) mindestens eines oder eine Kombination von Szintillationsmodus, Atmungsmodus, Flussmodus und Gradientenmodus beinhaltet.

6. Warnvorrichtung zur Abbiegesicherheit großer Fahrzeuge nach Anspruch 1, wobei sich das Steuermodul (30) auf einer Anzeigevorrichtung (40) befindet, die Anzeigevorrichtung (40) ausgelegt ist, um die Steueranweisung (41) zur Übertragung an das Steuermodul (30) zu erzeugen.

7. Warnvorrichtung zur Abbiegesicherheit großer Fahrzeuge nach Anspruch 1, wobei das Warnlicht (21), das von jeder der Warnvorrichtungen (20) bereitgestellt ist, ein strichartiges Licht ist.

8. Warnvorrichtung zur Abbiegesicherheit großer Fahrzeuge nach Anspruch 1, wobei die Einstellungshöhe der mindestens eine Abbiegewarnzone (11) kleiner als ein äußerer Radius der mehreren Reifen (12) ist.

9. Warnvorrichtung zur Abbiegesicherheit großer Fahrzeuge nach Anspruch 1, wobei jede der Warnvorrichtungen (20) eines von einem Tagfahrlicht, einem LED-Licht, einem Laserlicht oder einer Halogenlampe beinhaltet.

10. Warnvorrichtung zur Abbiegesicherheit großer Fahrzeuge nach Anspruch 1, wobei die Autokarosserie (10) eines von einem großen Passagierfahrzeug, Bus, Lastwagen, Kipper, Tourbus, volle Sattelzugmaschine, Sattelschlepper oder Transporter, beinhaltet.

## Revendications

1. Appareil d'avertissement de sécurité de braquage de grand véhicule, comprenant :
une carrosserie (10), une périphérie de la carrosserie (10) étant munie d'au moins une zone d'avertissement de braquage (11), et une partie inférieure de la carrosserie (10) comportant plusieurs pneus (12), l'au moins une zone d'avertissement de braquage (11) étant placée sur un cadre de la carrosserie (10) adjacent à la périphérie de l'un quelconque des différents pneus (12), et étant disposée sur la carrosserie (10) de façon à l'encercler transversalement, et s'étendant jusqu'à un autre des différents pneus (12),
une pluralité de dispositifs d'avertissement (20) placés sur la zone d'avertissement de braquage (11), chacun des dispositifs d'avertissement (20) fournissant une lumière d'avertissement (21) et ayant un angle d'inclinaison de façon à former un angle d'éclairage (θ) entre la lumière d'avertissement (21) vers le sol et la carrosserie (10) ; et
un module de commande (30), le module de commande (30) étant agencé pour recevoir une instruction de commande (41) pour générer un signal de commande (31), le module de commande (30) étant connecté aux dispositifs d'avertissement (20) pour émettre le signal de commande (31) aux dispositifs d'avertissement (20), le module de commande (30) étant agencé pour démarrer ou arrêter les dispositifs d'avertissement (20) sur la base du signal de commande (31),
**caractérisé par le fait que**
les lumières d'avertissement (21) fournies par les dispositifs d'avertissement (20) sont reliées les unes aux autres sur une ligne pour délimiter une limite d'une zone invisible, une région entre la ligne et la carrosserie (10) étant la zone invisible ;
une hauteur de réglage de l'au moins une zone d'avertissement de braquage (11) est comprise entre 1 et 1,4 mètre ;
l'angle d'éclairage (θ) entre la carrosserie (10) et une lumière d'avertissement (21) est compris entre 52 et 80 degrés.

2. Appareil d'avertissement de sécurité de braquage de grand véhicule selon la revendication 1, dans lequel les dispositifs d'avertissement (20) sont synchronisés avec un témoin de direction de la carrosserie (10), le module de commande (30) étant agencé pour démarrer et arrêter le témoin de direction et, lorsque le module de commande (30) démarre ou arrête le témoin de direction, le module de commande (30) génère simultanément le signal de commande (31) pour démarrer ou arrêter l'au moins un dispositif d'avertissement (20) sur la base du signal de commande (31).

3. Appareil d'avertissement de sécurité de braquage de grand véhicule selon la revendication 2, dans lequel le module de commande (30) est connecté à un élément de commande de témoin de direction, l'élément de commande de témoin de direction étant agencé pour envoyer une instruction de commande (41) et, lorsque l'élément de commande de témoin de direction envoie une instruction de commande (41), le module de commande (30) génère un signal de témoin de direction et le signal de commande (31), le module de commande (30) transmet le signal de témoin de direction au témoin de direction pour commander le démarrage ou l'arrêt du témoin de direction, et le module de commande (30) transmet simultanément le signal de commande (31) à l'au moins un dispositif d'avertissement (20) pour démarrer ou arrêter l'au moins un dispositif d'avertissement (20) sur la base du signal de commande (31).

4. Appareil d'avertissement de sécurité de braquage de grand véhicule selon la revendication 1, dans lequel les dispositifs d'avertissement (20) sont en outre agencés pour exécuter un mode d'avertissement (22) sur la base du signal de commande (31), et le mode d'avertissement (22) est un mode à luminosité constante.

5. Appareil d'avertissement de sécurité de braquage de grand véhicule selon la revendication 1, dans lequel les dispositifs d'avertissement (20) sont en outre agencés pour exécuter un mode d'avertissement (22) sur la base du signal de commande (31), et le mode d'avertissement comprend au moins un mode à scintillation, un mode à respiration, un mode à circulation et un mode à gradient, ou toute combinaison de ceux-ci.

6. Appareil d'avertissement de sécurité de braquage de grand véhicule selon la revendication 1, dans lequel le module de commande (30) est placé sur un dispositif d'affichage (40), le dispositif d'affichage (40) étant agencé pour générer l'instruction de commande (41) pour transmission au module de commande (30).

7. Appareil d'avertissement de sécurité de braquage de grand véhicule selon la revendication 1, dans lequel la lumière d'avertissement (21) fournie par chacun des dispositifs d'avertissement (20) est une lumière de type linéaire.

8. Appareil d'avertissement de sécurité de braquage de grand véhicule selon la revendication 1, dans lequel la hauteur de réglage de l'au moins une zone d'avertissement de braquage (11) est inférieure à un rayon externe des différents pneus (12).

9. Appareil d'avertissement de sécurité de braquage de grand véhicule selon la revendication 1, dans lequel chacun des dispositifs d'avertissement (20) comprend au moins un d'un feu de jour, d'une lampe à DEL, d'une lampe laser et d'une lampe halogène.

10. Appareil d'avertissement de sécurité de braquage de grand véhicule selon la revendication 1, dans lequel la carrosserie (10) comprend l'un parmi un véhicule de transport en commun de grande capacité, un autobus, un camion, un camion à benne, un autobus de tourisme, un tracteur-remorque, un tracteur-semi-remorque ou un véhicule de transport de marchandises.
